(19) Europäisches Patentamt
European Patent Office
Office européen des brevets

(11) **EP 3 901 871 A1**

(12) **EUROPÄISCHE PATENTANMELDUNG**

(43) Veröffentlichungstag:
**27.10.2021 Patentblatt 2021/43**

(51) Int Cl.:
*G06Q 10/06* (2012.01)     *G06Q 30/02* (2012.01)
*G06Q 50/06* (2012.01)

(21) Anmeldenummer: **21169682.8**

(22) Anmeldetag: **21.04.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.04.2020 DE 102020205038**

(71) Anmelder: **VOLKSWAGEN AG**
**38440 Wolfsburg (DE)**

(72) Erfinder:
• **Bippes, Michael**
  **38112 Braunschweig (DE)**
• **Weichelt, Nils Hendrik Robin**
  **10555 Berlin (DE)**

(54) **VERFAHREN, PROZESSORSCHALTUNG UND SYSTEM ZUM STEUERN EINES AUFBAUPROZESSES VON VERSORGUNGSEINRICHTUNGEN IN EINER VORBESTIMMTEN GEOGRAPHISCHEN REGION**

(57)     Die Erfindung betrifft ein Verfahren zum Steuern eines Aufbauprozesses von Versorgungseinrichtungen (11) in einer vorbestimmten geographischen Region (10), in welcher sich bereits Referenzeinrichtungen (12) befinden, wobei durch eine Prozessorschaltung (16) in einer digitalen Landkarte (18) der Region (10) mittels eines Rasters (22) die Region (10) in Rasterzellen (22') eingeteilt wird und für jede Rasterzelle (22') ein initialer Bedarfswert (T) ermittelt wird und deren Bedarfswert (B) in Abhängigkeit von einem Abstand zu einer zentralen Rasterzelle (32), die eine bereits vorhandene Versorgungseinrichtung (11) aufweist, reduziert wird, um ein Versorgungspotential der zentralen Rasterzelle (32) für die Rasterzelle (22') zu simulieren, und in einer virtuellen Ausbauphase (24) pro Rasterzelle (22) ein Bedarfsdeckungswert (D) bei zumindest virtuellem Vorhanden-Sein einer neuen Versorgungseinrichtung (11) ermittelt wird, und in einer Auswahlphase (28) diejenige Rasterzelle (22') mit dem größten Bedarfsdeckungswert (D) ausgewählt wird.

Fig. 1

**Beschreibung**

Die Erfindung betrifft ein Verfahren, mittels welchem ein Aufbauprozesses zum Aufbauen oder Installieren von Versorgungseinrichtungen in einer vorbestimmten geographischen Region gesteuert wird. Als Versorgungseinrichtungen können beispielsweise Tankanlagen für einen vorbestimmten Betriebsstoff vorgesehen sein, der in der Region neu zur Verfügung gestellt werden soll. Ein Beispiel hierfür ist eine Wasserstoff-Tankanlage für Kraftfahrzeuge. Durch das Verfahren soll ein Versorgungsnetz oder eine Versorgungsinfrastruktur in der Region derart aufgebaut oder ausgebaut werden, dass in der Region eine vorgegebenen Ausbaustufe oder ein vorgegebener Versorgungsgrad erreicht wird. Zu der Erfindung gehören auch eine Prozessorschaltung und ein System, mittels welchen das Verfahren durchgeführt werden kann und eine Versorgungsinfrastruktur und ein Versorgungsverfahren.

Neben einer Effizienzsteigerung der konventionellen Antriebe von Kraftfahrzeugen werden auch vermehrt alternative Antriebskonzepte angestrebt. Diese alternativen Antriebskonzepte müssen mit anderen Energieformen versorgt werden. Dazu zählen insbesondere Strom, Wasserstoff ($H_2$), flüssiges Propangas (LPG) und komprimiertes Erdgas (CNG). Damit diese Energieformen ihren Weg ins Automobil (Kraftfahrzeug) finden, werden neue Versorgungsinfrastrukturen benötigt. Ein weiteres Ziel ist die Reduzierung anderer Emissionen des Straßenverkehrs. Die europäische Abgasnorm, die kein CO2 aber andere Abgase reguliert, stellt zunehmend höhere Anforderungen an die Emissionen der Verbrennungsmotoren. Leistungsstarke Ottomotoren werden in Zukunft zusätzlich zum Kraftstoff ein genormtes Wasser benötigen. Dieses Wasser soll den Fahrzeugen in regelmäßigen räumlichen Abständen zur Verfügung gestellt werden. Dieselfahrzeuge der aktuellen Generation benötigen neben dem Kraftstoff regelmäßig ein weiterer Betriebsstoff. Sie müssen neben dem Kraftstoff eine wässrige Harnstofflösung, die auch Diesel Exhaust Fluid (DEF) genannt wird, tanken. DEF wird im Abgasstrang verdampft und reduziert den Ausstoß von Stickoxiden (NOx). Hierfür müssen PKW-Zapfanlagen installiert werden.

Für viele Antriebsarten wird daher in Zukunft eine neue Tankstelleninfrastruktur benötigt. Diese neuen Infrastrukturen solcher Versorgungseinrichtungen (z.B. Zapfanlagen) brauchen für ihren erfolgreichen Betrieb jedoch auch eine entsprechende Nachfrage, welche maßgeblich von der Marktdurchdringung der Antriebsart bestimmt wird, d.h. man kann sie nicht wahllos an beliebigen Stellen in einer Region installieren. Gleichzeitig ist eine verfügbare Versorgungsinfrastruktur die Grundvoraussetzung für die Akzeptanz der neuen Antriebskonzepte. Es gilt also zu klären, wie die Tankstelleninfrastruktur in einem passenden Versorgungsmaß aufgebaut werden kann, um so die technologische Transformation zu neuen Antrieben zu fördern. Es muss ermittelt werden, wie viele Tankstellen (oder allgemein Versorgungseinrichtungen) an welchen Orten benötigt werden. Um diese Frage zu beantworten, werden in der vorhandenen Forschung meistens komplexe Modelle erstellt, die auf Fahrtendaten basieren. Dieses Vorgehen ist aber für eine schnelle und frühzeitige Durchführung der Berechnungen hinderlich.

Die Planung von Tankstelleninfrastruktur konzentriert sich insbesondere auf den Ausbau für gasförmige Kraftstoffe. Xu et al. (Xu, X./Xu, B./Dong, J./Liu, X. (2017): Near-term analysis of a roll-out strategy to introduce fuel cell vehicles and hydrogen stations in Shenzhen China, Applied Energy, 196, S. 229-237) bestimmt mögliche Standorte für Wasserstofftankstellen anhand der Verteilung von Bevölkerung, Industrie und Einkommen. Dabei werden die Regionen nach Stadteilen der südchinesischen Stadt Shenzhen unterteilt und der Bedarf in den Stadtteilen prognostiziert. Darauf aufbauend werden Tankstellengrößen für die unterschiedlichen Bezirke empfohlen. Xu geht hier auch explizit auf die Berechnung des Angebotspreises ein.

Brey et al. (Brey, J. J./Brey, R./Carazo, A. F./Ruiz-Montero, M. J./Tejada, M. (2016): Incorporating refuelling behaviour and drivers' preferences in the design of alternative fuels infrastructure in a city, Transportation Research Part C: Emerging Technologies, 65, S. 144-155) entwickelt eine Methodik zum Ausbau bereits vorhandener Tankstellen für neue Kraftstoffe. Hierzu werden vorhandene Tankstellen als Ausbaukandidaten betrachtet und anhand der Bevölkerung und des Verkehrsaufkommens im Umkreis der Tankstellen bewertet. Dabei gehen die Faktoren mit unterschiedlicher Gewichtung in die Bewertung ein. Weiter entfernte Bevölkerungs- und Verkehrsanteile werden niedriger bewertet als nähere.

Der Erfindung liegt die Aufgabe zugrunde, den Aufbauprozess zum Aufbauen oder Installieren von Versorgungseinrichtungen für ein neues Produkt und/oder eine neue Dienstleistung effizient durchzuführen.

Durch die Erfindung ist ein Verfahren bereitgestellt, um einen Aufbauprozess zum Aufbauen oder Installieren von Versorgungsstationen oder Versorgungseinrichtungen in einer vorbestimmten geographischen Region zu steuern, wobei sich in der Region bereits Referenzeinrichtungen und eventuell sogar auch schon eine oder einige Versorgungseinrichtungen befinden und wobei jede Versorgungseinrichtung ein vorbestimmtes Produkt und/oder eine vorbestimmte Dienstleistung bereitstellen soll und jede Referenzeinrichtung bereits ein vorbestimmtes Referenzprodukt und/oder eine vorbestimme Referenzdienstleistung anbietet.

Als Produkt kann beispielsweise in der beschriebenen Weise ein Energieträger für ein Kraftfahrzeug (z.B. Wasserstoff oder Gas) oder ein Betriebsstoff für ein Kraftfahrzeug (beispielsweise Wasser oder eine Harnstofflösung) vorgesehen sein. Allgemein wird von einem Produkt und/oder einer Dienstleistung ausgegangen, für welche ein Nutzer sich zu der Versorgungseinrichtung hin begeben muss, beispielsweise mit seinem Kraftfahrzeug, um dieses zu betanken.

Das Verfahren orientiert sich an Referenzeinrichtungen, an welchen ein korrespondierendes Referenzprodukt und/oder eine korrespondierende Referenzdienstleistung angeboten wird. Was hier als "korrespondierend" angesehen werden soll, kann der Fachmann durch Wahl eines Typs der Referenzeinrichtungen festlegen. Soll beispielsweise als Produkt Wasserstoff für Kraftfahrzeuge angeboten werden, so kann beispielsweise eine Tankstelle als Referenzeinrichtung zugrunde gelegt werden, weil an dieser bereits Benzin und Diesel für Kraftfahrzeuge angeboten werden.

Gemäß dem Verfahren werden durch eine Prozessorschaltung folgende Schritte durchgeführt. In einem ersten Schritt wird in einer digitalen Landkarte der Region mittels eines Rasters mit einer vorbestimmten Rasterweite die Region in Rasterzellen eingeteilt. Die Bewertung der besagten Ausbaustufe oder des Versorgungsgrads für das bereitzustellende Produkt oder die bereitzustellende Dienstleistung erfolgt also auf der Grundlage von Rasterzellen. Die Rasterweite legt fest, mit welcher geografischen Auflösung die Ausbaustufe oder der Versorgungsgrad in der Region festgelegt wird. Die Rasterweite kann z.B. eine Diagonalenlänge oder eine Kantenlänge oder eine Fläche der jeweiligen Rasterzelle angeben. Es kann z.B. eine Rasterweite vorgesehen werden, durch die sich ein Durchmesser in einem Bereich von 100 Meter bis 50 Kilometer ergibt.

In einer initialen Bedarfsermittlung wird für jede Rasterzelle folgender Schritt durchgeführt: für die Rasterzelle wird in Abhängigkeit von einer Anzahl der in dieser Rasterzelle befindlichen Referenzeinrichtungen ein initialer Bedarfswert ermittelt. Der initiale Bedarfswert drückt aus, welcher Bedarf an Versorgungseinrichtungen voraussichtlich in der jeweiligen Rasterzelle vorliegen wird. Hierzu orientiert sich das Verfahren an der Infrastruktur aus Referenzeinrichtungen, die bereits einen vergleichbaren Bedarf in Bezug auf das Referenzprodukt/die Referenzdienstleistung wiederspiegeln oder repräsentieren. Durch geeignete Wahl des Referenzproduktes/der Referenzdienstleistung kann also allein durch Ermitteln der Geokoordinaten der Referenzeinrichtungen ermittelt werden, wo und/oder wie viele und/oder in welcher Dichte Versorgungseinrichtungen in der Region anzusiedeln sind, um eine geeignete Ausbaustufe an Versorgungseinrichtung für das bereitzustellende Produkt/die bereitzustellende Dienstleistung zu erreichen. Eine Konsequenz daraus ist, dass eine Rasterzelle ohne Referenzeinrichtungen auch keine Versorgungseinrichtung benötigt. Als initialer Bedarfswert kann beispielsweise diese Anzahl der ermittelten Referenzeinrichtungen verwendet werden.

In einer Bedarfswertanpassung wird für solche der Rasterzellen, in welchen sich bereits eine Versorgungseinrichtung befindet, folgender Schritt durchgeführt: die Rasterzelle wird als zentrale Rasterzelle für zumindest eine lokale Nachbarschaftsumgebung betrachtet (also ein Gebiet um die jeweilige zentrale Rasterzelle), wobei in der jeweiligen Nachbarschaftsumgebung andere der Rasterzellen zusammengefasst sind, die sich von der zentralen Rasterzelle aus mitversorgen lassen und deren aktueller Bedarfswert deshalb in Abhängigkeit von einem Abstand zu der zentralen Rasterzelle reduziert wird, um ein Versorgungspotential der zentralen Rasterzelle für die jeweilige Nachbarschaftsumgebung zu simulieren. Die Bedarfswertanpassung drückt also aus, dass eine bereits vorhandenen Versorgungseinrichtung auch von benachbarten Rasterzellen aus genutzt werden kann. Als der besagte Abstand kann allgemein z.B. ein mittlerer Abstand aller in der Nachbarschaftsumgebung enthaltenen Rasterzellen zugrunde gelegt werden, wenn alle Rasterzellen der Nachbarschaftsumgebung gemäß der gleichen Berechnungsvorschrift verändert werden sollen, z.B. mit dem gleichen Multiplikationsfaktor.

Eine lokale Nachbarschaftsumgebung kann das Gebiet um die jeweilige zentrale Zelle beschreiben. Für jede Rasterzelle ergibt sich somit eine andere Nachbarschaftsumgebung. Beispielsweise kann eine innere Nachbarschaftsumgebung all diejenigen anderen Rasterzellen umfassen, die an die zentrale Rasterzelle angrenzen. Eine weitere, äußere Nachbarschaftsumgebung kann beispielsweise als weiterer Ring oder Rahmen um diese innere Nachbarschaftsumgebung definiert sein, also all diejenigen Rasterzellen umfassen, die über eine andere Rasterzelle hinweg (also die innere Nachbarschaftsumgebung) erreichbar sind. Dieser Schritt des Verfahrens bildet nach, dass nicht in jeder Rasterzelle eine Versorgungseinrichtung benötigt wird, um einen vorgegebenen Versorgungsgrad oder eine vorgegebene Ausbaustufe zu erreichen. Von einer zentralen Rasterzelle aus können auch Rasterzellen in einer Nachbarschaftsumgebung mit versorgt werden, wobei dies natürlich umso schwieriger oder aufwändiger ist, je weiter diese andere Rasterzelle von der zentralen Rasterzelle entfernt ist. Dies wird durch die Abhängigkeit vom Abstand der jeweiligen Rasterzelle zu der jeweils aktuell betrachteten zentralen Rasterzelle ausgedrückt.

In einer virtuellen Ausbauphase wird dann für jede der Rasterzellen folgender Schritt durchgeführt: die Rasterzelle wird als zentrale Rasterzelle für ihre zumindest eine lokale Nachbarschaftsumgebung betrachtet und es wird ermittelt, welche potentielle Bedarfsdeckung mittels einer Versorgungseinrichtung in der zentralen Rasterzelle möglich wäre, indem der aktuelle Bedarfswert der zentralen Rasterzelle in Abhängigkeit von dem jeweiligen aktuellen Bedarfswert der anderen Rasterzellen in der jeweiligen Nachbarschaftsumgebung gemäß ihrem Abstand aufgewertet wird, woraus sich ein Bedarfsdeckungswert der zentralen Rasterzelle ergibt, also ein Wert für ihr Versorgungspotential oder ihr Bedarfsdeckungspotential.

Durch diesen Schritt des Verfahrens wird also simuliert oder ausgedrückt, wie sich die Bedarfswerte ändern würden, wenn eine weitere Versorgungseinrichtung in einer zentralen Rasterzelle installiert wird oder aufgebaut wird. Dies wird ausgedrückt, indem man den Wertzuwachs oder die Wertsteigerung ihres eigenen initialen Bedarfswerts dieser zentralen Rasterzelle als Bedarfsdeckungswert ausdrückt. Eine günstig gelegene zentrale Rasterzelle, von welcher aus auch benachbarte Rasterzellen mit hohem eigenen Bedarfswert mit versorgt werden, erhält somit einen höheren Bedarfsdeckungswert als eine zentrale Rasterzelle, die von anderen Rasterzellen mit geringem eigenen Bedarfswert umgeben ist. Der Bedarfsdeckungswert drückt aus oder ergibt eine Rangliste, welche angibt, welche Rasterzelle zuerst mit einer neuen Versorgungseinrichtung ausgestattet werden sollte, um in der Region das größte Delta oder die größte Steigerung in der Ausbaustufe oder dem Versorgungsgrad zu erhalten.

In einer Auswahlphase wird diejenige Rasterzelle mit dem größten Bedarfsdeckungswert ausgewählt wird und zu der ausgewählten Rasterzelle wird signalisiert, dass darin eine Versorgungseinrichtung bereitzustellen ist. Weisen zwei Rasterzellen denselben maximalen Bedarfsdeckungswert aus, so kann eine dieser Rasterzellen zufällig ausgewählt oder es können einige oder alle dieser Rasterzellen nach einer vorbestimmten Methode ausgewählt werden.

Durch die Erfindung ergibt sich der Vorteil, dass in einer Region diejenige Rasterzelle identifiziert werden kann, für die sich durch Bereitstellen einer weiteren Versorgungseinrichtung der größte Anstieg oder der größte Zuwachs in Bezug auf den Versorgungsgrad oder die Ausbaustufe ergibt. Dies ergibt eine effiziente Nutzung von Baueinheiten, mit denen die Versorgungseinrichtung dann installiert oder aufgebaut wird, da der größte Versorgungszuwachs erzielt wird.

Zu der Erfindung gehören auch Ausführungsformen, durch die sich zusätzliche Vorteile ergeben.

In einer Ausführungsform werden nach der Auswahlphase die Bedarfswertanpassung, die virtuelle Aufbauphase und die Auswahlphase so oft wiederholt, bis ein vorbestimmtes Abbruchkriteriums erfüllt ist, wobei vor jeder Wiederholung zumindest für jede bereits ausgewählte Rasterzelle deren Bedarfswert auf 0 gesetzt wird. Mit anderen Worten wird so oft die sich neu ergebende Rasterzelle mit dem größten Bedarfsdeckungswert ermittelt und ausgewählt, bis für die Region das Abbruchkriterium erfüllt ist. Das Abbruchkriterium kann der Fachmann derart festlegen, dass die besagte vorgegebene oder angestrebte Ausbaustufe oder der vorgegebene Versorgungsgrad erreicht ist. Damit eine Rasterzelle, die bereits ausgewählt wurde, nicht noch einmal ausgewählt wird, wird deren Bedarfswert vor der Iteration auf 0 gesetzt, was indiziert, dass dort kein weiterer Bedarf besteht, weil ja schon eine Versorgungseinrichtung für diese Rasterzelle geplant ist. Befindet sich in einer Rasterzelle bereits zu Beginn des Verfahren eine Versorgungseinrichtung, so kann für diese Rasterzelle bereits deren initialer Bedarfswert zu 0 gesetzt werden.

In einer Ausführungsform wird zusätzlich zumindest in einer innersten Nachbarschaftsumgebung der ausgewählten Rasterzelle der jeweilige Bedarfswert der Rasterzellen der Nachbarschaftsumgebung ebenfalls auf 0 gesetzt. Da von einer Rasterzelle mit Versorgungseinrichtung ausgehend auch die unmittelbar angrenzenden benachbarten Rasterzellen erst einmal mit versorgt werden können, kann dies simuliert oder nachgebildet werden, in dem auch deren Bedarfswert auf null gesetzt wird. Die besagte innere Nachbarschaftsumgebung kann also all diejenigen Rasterzellen umfassen oder enthalten, welche an eine ausgewählte Rasterzelle angrenzt, in welcher also eine Versorgungseinrichtung installiert werden wird. Befindet sich in einer Rasterzelle bereits zu Beginn des Verfahren eine Versorgungseinrichtung, so kann der initiale Bedarfswert von Rasterzellen ihrer inneren Nachbarschaftsumgebung zu 0 gesetzt werden.

In einer Ausführungsform umfasst das Abbruchkriterium, dass eine vorbestimmte Gesamtanzahl an Rasterzellen ausgewählt worden ist und/oder zumindest ein vorbestimmter Parameterwert, insbesondere ein Versorgungsgütemaß, einen jeweils vorbestimmten Wert erreicht hat. Mit anderen Worten kann die Gesamtanzahl an die verfügbare Baukapazität für den Aufbauprozess angepasst werden. Wenn also beispielsweise eine Baukapazität für 100 neue Versorgungseinrichtungen vorhanden ist, so kann die Gesamtanzahl auf 100 gesetzt werden und das Verfahren steuert dann den Aufbau in denjenigen Rasterzellen oder identifiziert diejenigen Rasterzellen, wo die Installation oder der Aufbau der Gesamtanzahl an Versorgungseinrichtungen am effizientesten in der Region wirkt. Das Abbruchkriterium kann zusätzlich oder alternativ dazu auch einen Parameterwert berücksichtigen, beispielsweise das Versorgungsgütemaß ermittelt werden, welcher mittlere Abstand der Versorgungseinrichtungen erreicht worden ist. Hierbei kann die Messung des mittleren Abstands auf diejenigen Rasterzellen bezogen sein, für die sich überhaupt ein Bedarfswert größer als 0 ergibt. "Leere" Rasterzellen, in denen auch keine Referenzeinrichtung vorhanden ist (initialer Bedarfswert gleich 0), können bei der Ermittlung des mittleren Abstands auch ignoriert werden.

In einer Ausführungsform wird für jede Nachbarschaftsumgebung jeweils ein Multiplikationsfaktor vorgegeben, welcher für jede Nachbarschaftsumgebung umso kleiner ist, je kleiner ein Abstand von deren Rasterzellen zu der zentralen Rasterzelle ist, und in der Bedarfswertanpassung erfolgt das Reduzieren durch Multiplizieren mit dem jeweiligen Multiplikationsfaktor der Nachbarschaftsumgebung. Der Multiplikationsfaktor kann beispielsweise in einem Wertebereich von 0 bis 1 liegen. Beispielsweise kann für Rasterzellen in einer inneren Nachbarschaftsumgebung, beispielsweise aller an die aktuelle Rasterzelle angrenzenden Rasterzellen, ein Multiplikationsfaktor von 0 vorgesehen sein. Weiter entfernte Rasterzellen, beispielsweise Rasterzellen einer äußeren Nachbarschaftsumgebung, die nur indirekt über die innere Nachbarschaftsumgebung erreicht werden können und an diese angrenzen, können beispielsweise mit einem Multiplikationsfaktor mit dem Wert 0,5 in ihrem Bedarfswert multipliziert werden.

In einer Ausführungsform wird anders herum für jede Nachbarschaftsumgebung jeweils ein Multiplikationsfaktor vorgegeben, welcher für jede Nachbarschaftsumgebung umso größer ist, je kleiner ein Abstand von deren Rasterzellen zu der zentralen Rasterzelle ist, und in der simulierten Ausbauphase das Aufwerten des Bedarfswerts der zentralen Rasterzelle ein Multiplizieren des jeweiligen Bedarfswerts der Rasterzellen der Nachbarschaftsumgebung mit dem jeweiligen Multiplikationsfaktor der Nachbarschaftsumgebung umfasst. Beispielsweise kann für Rasterzellen in einer inneren Nachbarschaftsumgebung, beispielsweise aller an die aktuelle Rasterzelle angrenzenden Rasterzellen, ein Multiplikationsfaktor von 1 vorgesehen sein. Weiter entfernte Rasterzellen, beispielsweise Rasterzellen einer äußeren Nachbarschaftsumgebung, die nur indirekt über die innere Nachbarschaftsumgebung erreicht werden können und an diese angrenzen, können beispielsweise mit einem Multiplikationsfaktor mit dem Wert 0,5 in ihrem Bedarfswert multipliziert werden. Ein Beispiel für die Berechnung des Bedarfsdeckungswerts besteht darin, den aktuellen Bedarfswert der zentralen Rasterzelle selbst und die aktuellen Bedarfswerte der umliegenden Rasterzellen aus den Nachbarschaftsumgebungen (wie sie sich nach der Bedarfswertanpassung ergeben) multipliziert mit einem entfernungsabhängigen Multiplikationsfaktor aufzusummieren.

Die Verwendung eines Multiplikationsfaktors ergibt den Vorteil, dass eine nummerisch stabile Berechnung des Bedarfswerts und des Bedarfsdeckungswerts auch dann gegeben ist, wenn eine Rasterzelle von mehreren anderen Rasterzelle aus, also nicht nur von einer einzelnen anderen Rasterzelle aus, mit versorgt werden könnte. Hier wird dann die Bedarfswertanpassung mehrfach den Bedarfswert skaliert oder multipliziert, ohne dass sich hierdurch beispielsweise ein negativer Bedarfswert ergeben kann.

In einer Ausführungsform ist die jeweilige Nachbarschaftsumgebung als Ring oder Rahmen um die zentrale Rasterzelle definiert oder die jeweilige Nachbarschaftsumgebung ist in Abhängigkeit von einer Verkehrsinfrastruktur geformt, die sich in der zentralen Rasterzelle und/oder zwischen der zentralen Rasterzelle und einem Gebiet der Nachbarschaftsumgebung und/oder in dem Gebiet der Nachbarschaftsumgebung befindet. Es kann also in der beschriebenen Weise eine innere Nachbarschaftsumgebung durch die an die zentrale Rasterzelle angrenzenden Rasterzellen gebildet sein und optional eine äußere Nachbarschaftsumgebung, die wiederum an die innere Nachbarschaftsumgebung angrenzende Rasterzellen umfassen kann. Um zusätzlich noch die tatsächliche Verkehrsanbindung der zentralen Rasterzelle an die umliegenden Rasterzellen zu berücksichtigen und somit die Erreichbarkeit einer Versorgungseinrichtung in der zentralen Rasterzelle von der Nachbarschaftsumgebung aus zu simulieren oder nachzubilden, kann die Form der Nachbarschaftsumgebung, also die Menge der von ihr umfassten oder enthaltenen Rasterzellen, gemäß der Infrastruktur gewählt werden. So ist beispielsweise eine zentrale Rasterzelle über eine Autobahn einfacher oder schneller zu erreichen, sodass eine Nachbarschaftsumgebung sich auch über mehrere an der Autobahn entlang liegenden Rasterzellen erreichbar ist. Es kann somit eine schnelle Anbindung von Rasterzellen an die zentrale Rasterzelle berücksichtigt werden.

In einer Ausführungsform wird das Raster als Rechteckraster oder als hexagonales Raster oder als Dreiecksraster realisiert. Hierdurch ergibt sich der Vorteil, dass die Region mittels der Rasterzellen flächendeckend überschneidungsfrei abgedeckt werden kann.

In einer Ausführungsform sind den Referenzeinrichtungen jeweils Geopositionsdaten jeweiliger Geokoordinaten der Referenzeinrichtung zugeordnet und die Geopositionsdaten werden mittels einer kartographischen Projektion auf eine Ebene der Landkarte transformiert oder das Raster ist in Kugelkoordinaten oder sphärische Koordinaten definiert. Mit anderen Worten wird eine Verzerrung ausgeglichen, die sich durch Verwendung unterschiedlicher Koordinatensysteme ansonsten ergeben könnte. Das Raster kann in kartesischen Koordinaten definiert sein und durch die kartografische Projektion, das heißt eine Koordinatentransformation, werden die Geokoordinaten (Kugelkoordinaten) in das kartesische Koordinatensystem der Landkarte transformiert. Ein Beispiel für eine solche kartografische Projektion ist die Mollweide-Projektion. Alternativ kann vorgesehen sein, das Raster in Kugelkoordinaten oder sphärischen Koordinaten zu definieren oder anzugeben, sodass es im selben Koordinatensystem wie die Geokoordinatenreferenzeinrichtungen definiert ist. Hierdurch wird eine Verzerrung minimiert.

In einer Ausführungsform betrifft der Aufbauprozess Versorgungseinrichtungen für einen vorbestimmten Betriebsstoff für Kraftfahrzeuge betrifft und als Referenzeinrichtungen Tankstellen zugrunde gelegt werden. Mit anderen Worten kann das Verfahren dafür vorgesehen sein, Versorgungseinrichtungen für Kraftfahrzeuge bereitzustellen, das heißt es geht hier um einen Betriebsstoff als Produkt, beispielsweise Wasserstoff oder Gas oder Harnstofflösung oder Wasser, dass einer vorgegebenen Norm entspricht. Beispielsweise können solche Versorgungseinrichtungen also Zapfanlagen sein.

In einer Ausführungsform wird gemäß der Signalisierung für die ausgewählte Rasterzelle oder die ausgewählten Rasterzellen jeweils ein Installationsvorgang zum Installieren jeweils einer Versorgungseinrichtung ausgelöst. Mit anderen Worten erfolgt also das aktive Steuern oder Einstellen zumindest einer Baueinheit, um in den ausgewählten Rasterzellen jeweils tatsächlich eine Versorgungseinrichtung zu installieren, wenn sich dort nicht bereits eine Versorgungseinrichtung befindet. Somit wird also der tatsächliche Ausbau oder Aufbau in der Region gemäß dem Verfahren gesteuert.

Beispielsweise können an die zumindest eine Baueinheit die Koordinaten und/oder Adressen der zumindest einen ausgewählten Rasterzelle signalisiert werden, damit darin eine Versorgungseinrichtung mittels der zumindest einen Baueinheit aufgebaut wird. Beispielsweise können entsprechende Auftragsdaten für den Ausbau durch die Prozessorschaltung erzeugt werden. Mit anderen Worten wird das mittels des Verfahrens erzeugte Signal, das die zumindest eine ausgewählte Rasterzelle beschreibt oder signalisiert, dazu genutzt, um den Aufbau von Versorgungseinrichtungen auszulösen. Durch den Aufbau entsteht in der Region eine Versorgungsinfrastruktur aus Versorgungseinrichtungen, welche die Region gemäß dem durch das Abbruchkriterium definierten Versorgungsgrad oder der Versorgungsstufe mit einem Produkt, insbesondere einem Kraftstoff für Kraftfahrzeuge, versorgt. Mit anderen Worten nimmt die durch das Verfahren bewirkte Signalisierung Einfluss auf die Ausgestaltung der Versorgungsinfrastruktur, insbesondere auf die Standorte der Versorgungseinrichtungen. Innerhalb einer ausgewählten Rasterzelle kann eine konkreter Standort für eine Versorgungseinrichtung vom Fachmann gewählt werden, wobei sich der Fachmann hier an Kriterien für den Bau von Tankstellen orientieren kann. Es erfolgt somit der Bau von Versorgungseinrichtungen an solchen Standorten oder in solchen Rasterzellen, die gemäß eine Ausführungsform des Verfahrens ermittelt wurden.

Durch die Erfindung ist auch eine Prozessorschaltung bereitgestellt, die dazu eingerichtet ist, einen Datensatz, welcher eine Gesamtmenge von in einer vorbestimmten geographischen Region befindlichen Referenzeinrichtungen beschreibt, zu empfangen und auf Grundlage des Datensatzes ein erfindungsgemäßes Verfahren durchzuführen. Die Prozessorschaltung kann zumindest einen Mikroprozessor aufweisen. Die Prozessorschaltung kann beispielsweise als ein Computer oder als ein Computerverbund realisiert sein. Zum Durchführen einer Ausführungsform des erfindungsgemäßen Verfahrens kann die Prozessorschaltung einen Programmcode oder eine Software umfassen, die Programminstruktionen aufweisen kann, bei Ausführung durch die Prozessorschaltung die Ausführungsform des erfindungsgemäßen Verfahrens durchzuführen. Der Programmcode oder die Software kann hierzu in einem Datenspeicher der Prozessorschaltung gespeichert sein, der mit dem zumindest einen Mikroprozessor gekoppelt sein kann.

Über die besagte Kopplung können beispielsweise die Koordinaten und/oder Adressen der ausgewählten Rasterzelle signalisiert werden, damit darin der Aufbau eine Versorgungsstation mittels der zumindest einen Baueinheit ausgelöst wird. Beispielsweise können entsprechende Auftragsdaten durch die Prozessorschaltung erzeugt werden. Innerhalb einer ausgewählten Rasterzelle kann eine konkreter Standort für eine Versorgungseinrichtung in der beschriebenen Weise festgelegt werden.

Die Erfindung stellt auch die resultierende Versorgungsinfrastruktur bereit, die dazu eingerichtet ist, eine vorbestimmte geographische Region mit einem vorbestimmten Produkt entsprechend einem vorbestimmten Versorgungsgrad zu versorgen, also mit einer vorgegebenen Flächenverteilung oder Dichte an Versorgungseinrichtungen, wobei die Versorgungsinfrastruktur hierzu Versorgungseinrichtung aufweist, deren Standorte in der Region durch eine Ausführungsform des beschriebenen Verfahrens und/oder durch die beschriebene Prozessorschaltung und/oder durch das beschriebene System festgelegt sind. Die Versorgungsinfrastruktur versorgt die Region insbesondere mit Produkten, die ein persönliches Erscheinen erfordern, z.B. indem ein Nutzer an einer Versorgungseinrichtung mit einem Kraftfahrzeug erscheint, um dieses mit einem Kraftstoff zu betanken. An den ermittelten Standorten oder Rasterzellen werden dazu auf der Grundlage des Verfahrens Versorgungseinrichtungen für diese Produkte, insbesondere für einen Kraftstoff für Kraftfahrzeuge, aufgebaut und dann in der Region als Versorgungseinrichtungen betrieben. Dies ergibt die Versorgungsinfrastruktur.

Durch die Auswahlphase wird festgelegt, welche Verkehrsströme oder welcher Verkehrsfluss, z.B. den Fahrzeugverkehr, sich in der Region durch die resultierende Versorgungsinfrastruktur ergibt, wenn deren Versorgungseinrichtungen genutzt werden. Denn es kann z.B. die summierte Streckenlänge und/oder Dauer aller Umwege, die Nutzer der Versorgungsstationen in der Region zum Erreichen der Versorgungsstationen zurücklegen, minimiert werden oder zumindest unter einen vorbestimmten Schwellenwert eingestellt werden, indem man sich an den Referenzeinrichtungen orientiert.

Indem durch das Verfahren zu der zumindest einen ausgewählten Rasterzelle signalisiert wird, dass in dieser eine Versorgungseinrichtung errichtet werden soll, und dann die Versorgungseinrichtung dort innerhalb der Region gebaut wird, ergibt sich der Aufbau einer Versorgungsinfrastruktur, die in der gesamten Region den Versorgungsgrad oder die Ausbaustufe in Bezug auf das Verteilen oder Versorgen der jeweils vorgesehenen Produkte oder einen Kraftstoff für Kraftfahrzeuge (d.h. allgemein ein Betriebsmittel für Kraftfahrzeuge) sicherstellt.

Durch den Betrieb der erfindungsgemäßen Versorgungsinfrastruktur ergibt sich ein Versorgungsverfahren, durch welches ein Produkt, insbesondere ein Betriebsmittel für Kraftfahrzeuge, bevorzugt ein Kraftstoff, innerhalb der Region an Standorten oder Versorgungseinrichtungen ausgegeben oder bereitgestellt werden, die durch eine Ausführungsform des erfindungsgemäßen Verfahrens ermittelt sind. Somit wird die Region mit den Produkten, insbesondere dem Betriebsmittel für Kraftfahrzeuge, auf einem Versorgungsgrad oder einer Ausbaustufe versorgt, die für die gesamte Region sichergestellt ist.

Durch die Erfindung ist auch ein System bereitgestellt, um einen Aufbauprozesses zum Aufbauen oder Installieren von Versorgungseinrichtungen in einer vorbestimmten geographischen Region durchzuführen, wobei das System eine Ausführungsform der erfindungsgemäßen Prozessorschaltung aufweist und die Prozessorschaltung mit zumindest einer Baueinheit zum Installieren einer Versorgungseinrichtung gekoppelt ist. Die Kopplung kann eine Kommunikationsverbindung, z.B. eine Internetverbindung, umfassen. Eine Baueinheit kann beispielsweise durch ein Bauunternehmen oder einen Bauhof realisiert sein. Es können somit Installationsgeräte aktiviert oder gesteuert werden, um eine Versorgungseinrichtung in einer Rasterzelle zu installieren. Beispielsweise können dort Baumaschinen angesteuert werden.

Die Erfindung umfasst auch die Kombinationen der Merkmale der beschriebenen Ausführungsformen.

Im Folgenden sind Ausführungsbeispiele der Erfindung beschrieben. Hierzu zeigt:

Fig. 1    eine schematische Darstellung einer Ausführungsform des erfindungsgemäßen Systems;

Fig. 2    ein Flussschaudiagramm zur Veranschaulichung eines Verfahrens, wie es durch das System von Fig. 1 ausgeführt werden kann;

Fig. 3    eine Skizze zur Veranschaulichung eines Rasters und Nachbarschaftsumgebungen;

Fig. 4    eine Skizze zur Veranschaulichung einer initialen Bedarfswertermittlung;

Fig. 5    eine Skizze zur Veranschaulichung einer Bedarfswertanpassung; und

Fig. 6    eine Skizze zur Veranschaulichung einer virtuellen Ausbauphase.

Bei den im Folgenden erläuterten Ausführungsbeispielen handelt es sich um bevorzugte Ausführungsformen. Bei dem Ausführungsbeispielen stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.
In den Figuren sind funktionsgleiche Elemente jeweils mit denselben Bezugszeichen versehen.

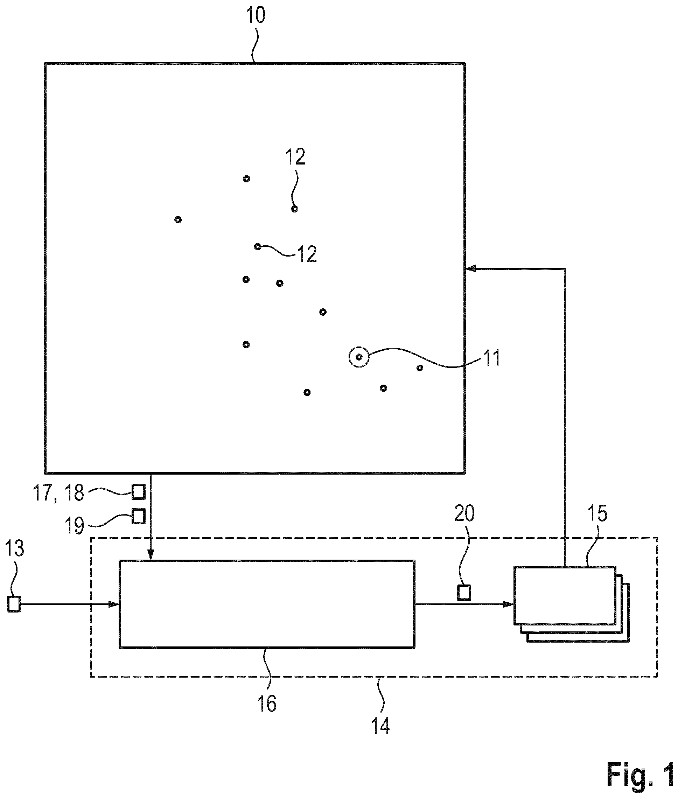

Fig. 1 zeigt eine Region 10, bei der es sich beispielsweise um einen Stadtteil oder eine Stadt oder eine Gemeinde oder ein Bundesland oder ein ganzes Land handeln kann. In der Region 10 sollen Versorgungsstationen oder Versorgungseinrichtungen 11 bereitgestellt werden, mittels welchen in der Region 10 Benutzer mit einem vorbestimmten Produkt und/oder einer vorbestimmten Dienstleistung an der jeweiligen Versorgungseinrichtung 11 versorgt werden können sollen. Beispielsweise kann es sich bei den Versorgungseinrichtungen 11 um Tankanlagen für einen bestimmten Energieträger, beispielsweise Wasserstoff, oder ein anderes der bereits beschriebenen Produkte handeln, um aber nur Beispiele genannt zu haben. Dem Beispiel liegt die Annahme zugrunde, dass die vorhandenen Versorgungseinrichtungen 11 als nicht ausreichend angesehen werden.
In der Region 10 können sich aber bereits Referenzeinrichtungen 12 befinden, von denen in Fig. 1 nur einige mit einem Bezugszeichen versehen sind und die ein Referenzprodukt und/oder eine Referenzdienstleistung anbieten, bei denen davonausgegangen werden kann, dass in der Region 10 ein vergleichbarer oder ähnlicher Bedarf besteht, wie für das Produkt/die Dienstleistung der Versorgungseinrichtungen 11. Eine Referenzeinrichtung im Fall eines Energieträgers für ein Kraftfahrzeug kann beispielsweise eine Tankstelle sein, die Benzin und/oder Diesel als Referenzprodukt anbietet. Wie in Fig. 1 dargestellt kann sich in der Region 10 bereits eine Versorgungseinrichtung 11 befinden. Allerdings soll für die Region 10 eine Ausbaustufe oder ein Versorgungsgrad an Versorgungseinrichtungen 11 auf einen vorgegebenen Versorgungsgrad oder eine vorgegeben Ausbaustufe 13 eingestellt oder ausgebaut werden. Hierzu kann ein System 14 bereitgestellt werden, durch welches mittels einer oder mehrerer Baueinheiten 15 der Ausbau weiterer Versorgungseinrichtungen 11 in der Region 10 durchgeführt werden kann. Das System 14 kann eine Prozessorschaltung 16 aufweisen, welcher Daten betreffend die Ausbaustufe 13 vorgegeben werden können. Die Prozessorschaltung 16 kann des Weiteren Kartendaten 17 einer Landkarte 18 der Region 10 empfangen. Des Weiteren kann die Prozessorschaltung 16 einen Datensatz 19 empfangen, welcher die in der Region 10 bereits vorhandenen Referenzeinrichtungen und Versorgungseinrichtungen 11 beschreiben kann. Beispielsweise können die jeweiligen Geokoordinaten der Referenzeinrichtungen 12 und bereits vorhandener Versorgungseinrichtungen 11 in dem Datensatz 19 angegeben sein.
Die Prozessorschaltung 16 kann auf Grundlage der empfangenen Daten ein Verfahren durchführen, um eine Signalisierung 20 zu erzeugen, beispielsweise ein Steuersignal, um der zumindest einen Baueinheit 15 zu signalisieren, wo in der Region 10 jeweils eine weitere Versorgungseinrichtung 11 zu installieren oder aufzubauen ist. Somit ergibt sich für jede Versorgungseinrichtung 11 ein Installationsvorgang, beispielsweise der Aufbau einer Zapfanlage für Kraftfahrzeuge.

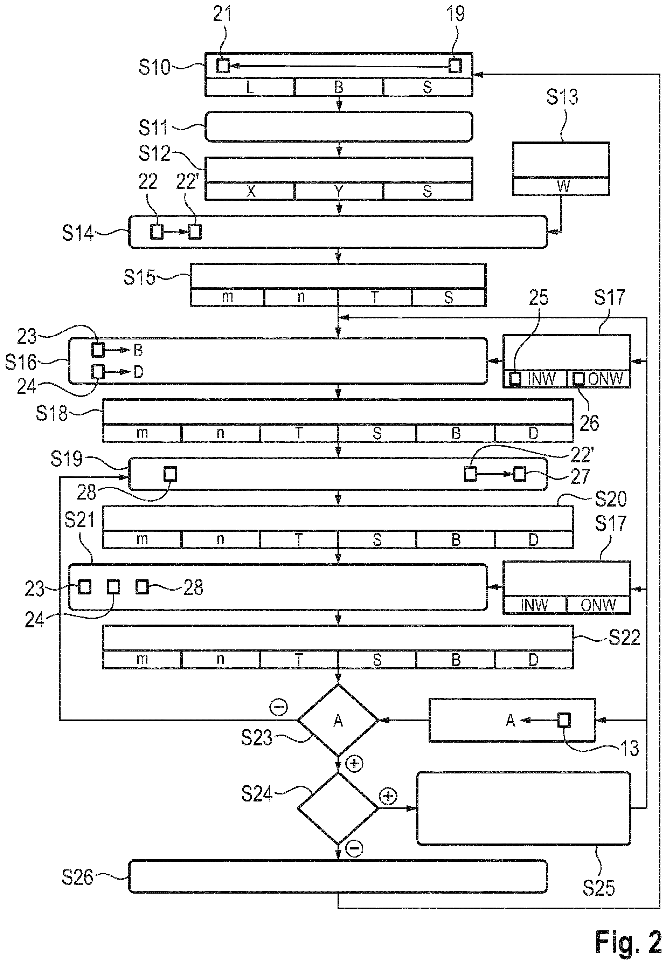

Fig. 2 veranschaulicht ein Verfahren, das durch die Prozessorschaltung 16 hierzu durchgeführt werden kann.
In einem Schritt S10 kann der Datensatz 19 empfangen werden, in welchem die Geopositionsdaten 21 mit den Geokoordinaten der Referenzeinrichtungen 12 und eventuell vorhandener Versorgungseinrichtungen 11 enthalten sein können. Die Geokoordinaten können jeweils beispielsweise einen Längengrad L und einen Breitengrad B und/oder einen jeweiligen Ausbaustatus S angeben, also beispielsweise die Angabe, ob es sich bereits um eine Versorgungseinrichtung 11 handelt oder lediglich um eine Referenzeinrichtung 12. Die Geopositionsdaten einer jeweiligen Basiseinrichtung können mittels des besagten Empfängers eines Positionssignals eines GNSS (Global Navigation Satellite System), wie beispielsweise dem GPS (Global Positioning System), gemessen oder erzeugt oder ermittelt werden und diese Geopositionsdaten können zu dem Datensatz zusammengefasst werden.
In einem Schritt S11 kann eine Koordinatentransformation oder kartografische Projektion durchgeführt werden, wodurch in einem Schritt S12 transformierte Koordinaten der vorhandenen Referenzeinrichtungen 12 vorliegen, also Koordinaten X, Y für die Landkarte 18. In einem Schritt S13 kann für eine Rasterung oder die Anwendung eines Rasters oder eines Maschennetzes für die Region 10 eine Maschenweite oder Rasterweite w vorgegeben werden. In einem Schritt S14 kann dann in der Landkarte 19 ein Raster 22 auf die Region 10 angewendet werden. Daraus ergibt sich in einem Schritt S15 eine gerasterte Angabe der Positionen der Referenzeinrichtungen 12 und möglicher bereits vorhandener Versorgungseinrichtungen 11, das heißt es gibt Rasterkoordinaten m, n (beispielsweise Spalte m und Zeile n). Für jedes Raster kann eine Anzahl vorhandener Referenzeinrichtungen 12 ermittelt werden, was einem initialen Bedarfswert T entspricht, der indiziert, wie groß der Bedarf an Referenzeinrichtungen 12 in der jeweiligen Rasterzelle n, m ist.

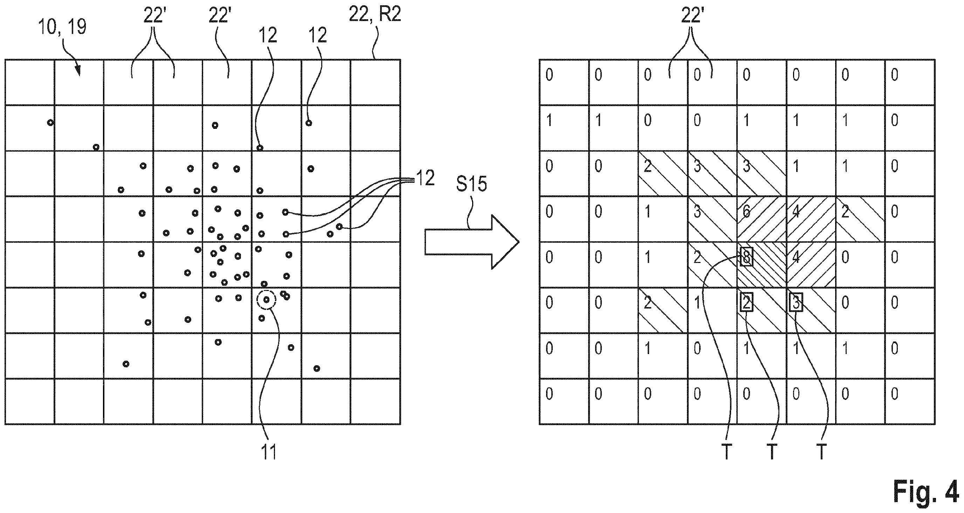

In einem Schritt S16 kann eine Bedarfswertanpassung 23 und eine virtuelle Ausbauphase 24 durchgeführt werden, was im Zusammenhang mit Fig. 4 bis Fig. 6 noch genauer beschrieben werden wird. Aus der Bedarfswertanpassung 23 kann sich ein aktueller Bedarfswert B ergeben und aus der virtuellen Ausbauphase 24 kann sich ein Bedarfsdeckungswert D ergeben. Hierbei wird für jede Rasterzelle des Rasters 22 eine Nachbarschaftsumgebung oder mehrere Nachbarschaftsumgebungen definieren. Beispielhaft können in einem Schritt S17 eine innere Nachbarschaftsumgebung mit einer inneren Nachbarschaftsweite INW und eine darum herum liegende äußere Nachbarschaftsumgebung mit einer äußeren Nachbarschaftsweite ONW vorgegeben werden.

In einem Schritt S18 ergeben sich somit für die Rasterzellen jeweils zu den Koordinaten n, m, dem initialen Bedarfswert T und dem Ausbaustatus S noch der Bedarfswert B und der Bedarfsdeckungswert D.

In einem Schritt S19 kann ermittelt werden, welche Rasterzelle 22' den größten Bedarfsdeckungswert D ergibt, das heißt als erste mit einer Versorgungseinrichtung 11 versorgt werden sollte oder dort eine Versorgungseinrichtung 11 aufgebaut werden sollte, um die Ausbaustufe 13 am effizientesten zu erreichen. In dem Schritt 19 findet somit eine Auswahlphase 28 statt.

In einem Schritt S20 kann nun zumindest für diese ausgewählte Rasterzelle 27 der Bedarfswert B zu 0 gesetzt werden, da deren Bedarf durch die Installation einer Versorgungseinrichtung 11 gedeckt ist. In einem Schritt S21 können die Bedarfswertanpassung 23, die virtuelle Ausbauphase 24 und die Auswahlphase 28 wiederholt werden mit dem angepassten Bedarfswert B. Hierdurch ergeben sich in einem Schritt S22 neue Werte für die Bedarfswerte B und Bedarfsdeckungswerte D. Anhand eines Abbruchkriteriums A kann in einem Schritt S23 überprüft werden, ob noch eine weitere Rasterzelle mit einer Versorgungseinrichtung 11 versorgt werden soll. Ist das Abbruchkriterium unerfüllt (Minus-Zeichen), so kann mit dem Schritt S19 fortgefahren werden. Ist dagegen das Abbruchkriterium erfüllt (Plus-Zeichen), kann überprüft werden, ob ein neuer Wert für die Ausbaustufe 13 vorliegt, was einen Schritt S24 ergibt.

Das Abbruchkriterium A kann aus der aktuell vorgegebenen Ausbaustufe 13 hergeleitet werden, beispielsweise kann in der beschriebenen Weise eine Zuordnung aus möglichen Werten für die Ausbaustufe 13 ein geforderter mittlerer Abstand der Versorgungseinrichtungen 11 und/oder eine Gesamtanzahl auszubauender Rasterzellen 22' vorgegeben werden. Es kann beispielsweise mittels einer Look-up-Tabelle eine Zuordnung von Ausbaustufe 13 zum Abbruchkriterium A gebildet werden.

Ist eine neue Ausbaustufe 13 im Schritt S24 erkannt oder gefordert worden, so kann in einem Schritt S25 eine Initialisierung der Nachbarschaftsweiten INW, ONW und des Abbruchkriteriums A erfolgen und dann mit dem Schritt S15 fortgefahren werden. Liegt dagegen keine weitere Steigerung der Ausbauphase im Schritt S24 vor, so kann in einem Schritt S26 der Aufbauprozess für die Region 10 beendet werden.

Der im Schritt S10 empfangene Datensatz 19 kann die Gesamtmenge der in der Region 10 befindlichen Referenzeinrichtungen 12 beschreiben und/oder solche Referenzeinrichtungen 12, die eine bestimmte Eigenschaft erfüllen, beispielsweise an einer Autobahn angeordnet sind oder in einem Stadtgebiet. Dann kann für jede dieser unterschiedlichen Typen von Referenzeinrichtungen das Verfahren separat oder getrennt durchgeführt werden.

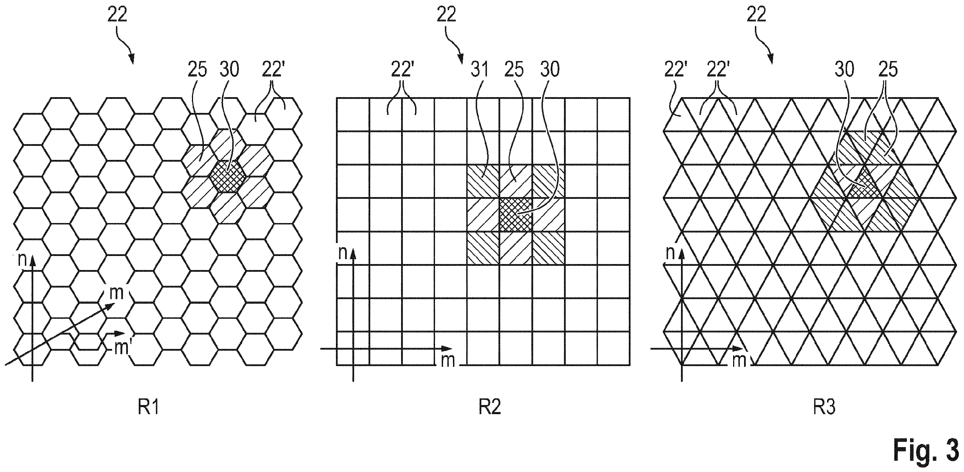

Fig. 3 veranschaulicht mögliche Ausführungsformen des Rasters 22, um die Region auf der Landkarte 18 in Rasterzellen 22' einzuteilen.

Ein mögliches Raster 22 ist ein hexagonales Raster R1, bei welchem jede Rasterzelle 22' durch das dargestellte nicht-orthogonale Koordinatensystem mit den Koordinaten n, m oder alternativ m', n identifiziert werden kann. Dargestellt ist, wie für eine einzelne Rasterzelle 22' diese jeweils als zentrale Rasterzelle 30 angesehen werden kann, die durch eine innere Nachbarschaftsumgebung 25 angrenzender Rasterzellen 22' umgeben ist.

Als weiteres mögliches Raster 22 kann ein Rechteckraster R2 vorgesehen sein, für welches sich dann ein orthogonales Koordinatensystem mit Koordinaten n, m für jede Rasterzelle 22' ergibt. Auch hier kann jede Rasterzelle 22' als zentrale Rasterzelle 30 von einer inneren Nachbarschaftsumgebung 25 umgeben sein, wobei hier zwei Möglichkeiten dargestellt sind, nämlich zum einen ein Rahmen 31 aller umgebenden Rasterzellen einerseits oder lediglich die Rasterzellen 22' mit gemeinsamer Kante zur zentralen Rasterzelle 30.

Als weiteres mögliches Raster 22 kann ein Dreiecksraster R3 vorgesehen sein, in welchem sich ebenfalls dreieckförmige Rasterzellen 22' durch Koordinaten n, m eindeutig identifizieren lassen. Auch hier sind zwei mögliche Varianten von innerer Nachbarschaftsumgebung 25 zu einer zentralen Rasterzelle 30 dargestellt.

Fig. 4 veranschaulicht, wie ausgehend von einem Raster 22 als Rechteckraster R2 die Region 10 in Rasterzelle 22' eingeteilt werden kann. Der Übersichtlichkeit halber sind nur einige Rasterzellen 22' mit einem Bezugszeichen versehen. In der Region 10 können sich in der beschriebenen Weise die vorhandenen Referenzeinrichtungen 12 befinden, von denen ebenfalls der Übersichtlichkeit halber nur einige mit einem Bezugszeichen versehen sind. Beispielhaft ist für eine Rasterzelle auch bereits dargestellt, dass bereits eine Versorgungseinrichtung 11 in der Region 10 vorhanden sein kann.

Durch die beschriebene initiale Bedarfsermittlung im Schritt S15 kann für jede Rasterzelle der jeweilige initiale Bedarfswert T ermittelt werden, wobei in Fig. 4 wieder nur einige initiale Bedarfswerte mit einem Bezugszeichen versehen sind. Beispielsweise können in der jeweiligen Rasterzelle 22' enthaltene Referenzeinrichtungen 12 und Versorgungseinrichtungen 11 gezählt werden und die Gesamtanzahl als initialer Bedarfswert T angegeben werden.

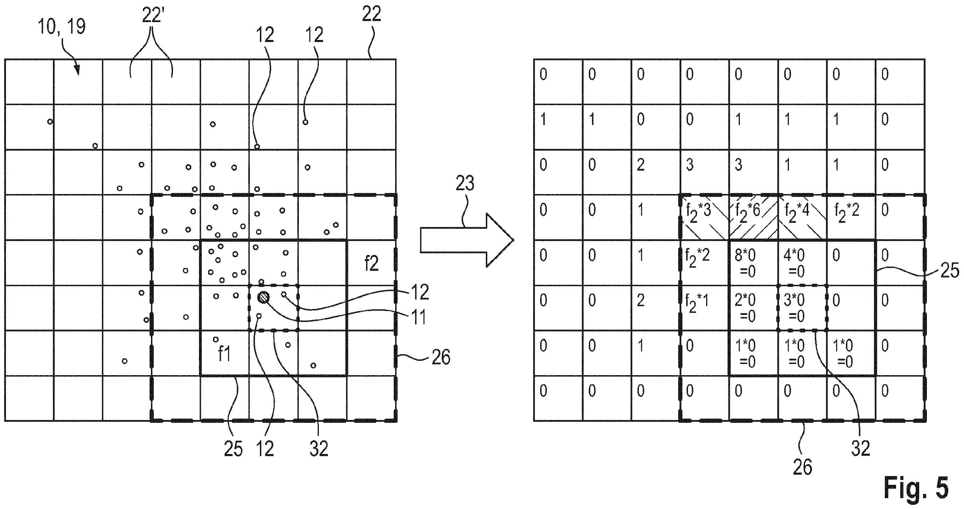

Fig. 5 veranschaulicht, wie davon ausgehend für das Raster 22 die Bedarfswertanpassung 23 für diejenigen Rasterzellen 22' durchgeführt werden kann, in denen sich bereits eine Versorgungseinrichtung 11 befindet. Dies ist hier für eine Rasterzelle 32 veranschaulicht. Zu der Rasterzelle 32 kann die beschriebene innere Nachbarschaftsumgebung 25 und aus den daran angrenzenden Rasterzellen eine äußere Nachbarschaftsumgebung 26 definiert sein. Für die innere Nachbarschaftsumgebung 25 kann für jede ihrer Rasterzellen ein Multiplikationsfaktor f1 und für die Rasterzellen der äußeren Nachbarschaftsumgebung 26 ein Multiplikationsfaktor f2 definiert sein. Der Multiplikationsfaktor f1 kann beispielsweise den Wert 0 aufweisen, der Multiplikationsfaktor f2 kann beispielsweise 0,5 betragen.

Für die zentrale Rasterzelle 22 ergibt sich ein Bedarfswert von 0, da dort bereits eine Versorgungseinrichtung 11 vorhanden ist. Für die Rasterzellen der inneren Nachbarschaftsumgebung 25 ergibt sich der angepasste Bedarfswert B als Produkt aus dem initialen Bedarfswert T multipliziert mit dem Multiplikationsfaktor f1, sodass in dem vorliegenden Beispiel davon ausgegangen wird, dass für die gesamte innere Nachbarschaftsumgebung 25 der Bedarf ebenfalls 0 ist, also der Bedarf gedeckt ist. Für die Rasterzellen der äußeren Nachbarschaftsumgebung 26 kann der angepasste Bedarfswert B berechnet werden als initialer Bedarfswert T multipliziert mit dem Multiplikationsfaktor f2, sodass also der angepasste Bedarfswert B halbiert wird mit jeder zentralen Rasterzelle 22 in der Umgebung, für welche die jeweilige Rasterzelle in der äußeren Nachbarschaftsumgebung liegt.

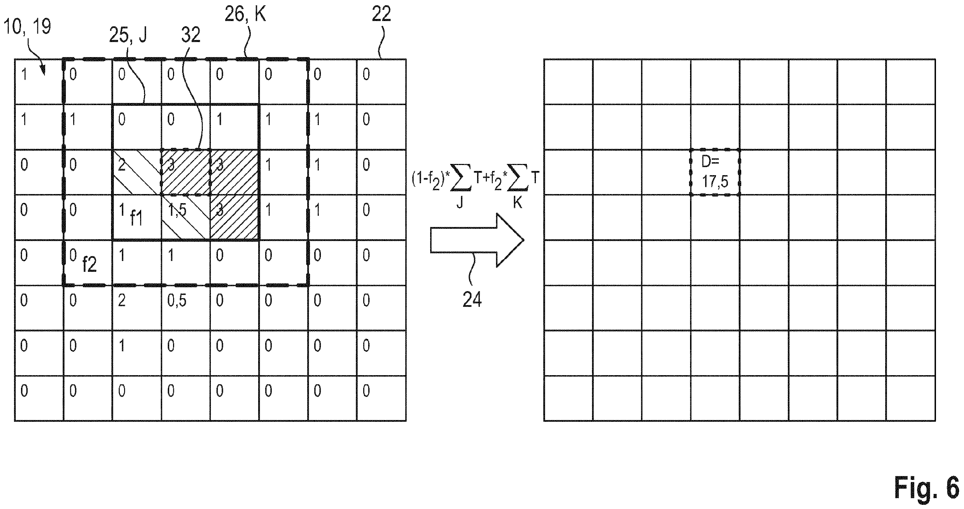

Für die Berechnung des Bedarfsdeckungswert D einer jeweiligen zentralen Rasterzelle 32 kann für die innere Nachbarschaftsumgebung 25 ein Multiplikationsfaktor f1 und für die Rasterzellen der äußeren Nachbarschaftsumgebung 26 ein Multiplikationsfaktor f2 berechnet werden. Hier in diesem Fall der virtuellen Ausbauphase 24 kann der Multiplikationsfaktor f1 1 und der Multiplikationsfaktor f2 den Wert 0,5 aufweisen. Für die Berechnung der gewichteten Summe, die in Fig. 6 dargestellt ist, kann die Menge J der Koordinaten aller innerhalb der Grenzen der inneren Nachbarschaftsumgebung 25 befindlichen Rasterzellen, also auch der zentralen Rasterzelle 32, definiert sein, während die Menge K aller Koordinaten der Rasterzellen in den Grenzen der äußeren Nachbarschaftsumgebung 26 (also auch die Rasterzellen aus der inneren Nachbarschaftsumgebung 25 und die zentrale Rasterzelle 32) definiert sein, wodurch sich für die Berechnung des Bedarfsdeckungswerts D die in Fig. 6 dargestellte Formel schreiben lässt. In dem Beispiel von Fig. 6 ergibt sich für die dargestellte kenntlich gemachte zentrale Rasterzelle 32 der Bedarfsdeckungswert D gleich 17,5. Dieser kann mit den anderen Bedarfsdeckungswerten D der übrigen Rasterzellen verglichen werden und die Rasterzelle mit dem maximalen Bedarfsdeckungswert D ausgewählt werden (Schritt S19).

Für die ausgewählte Rasterzelle 27 kann dann die Signalisierung 20 (siehe Fig. 1) für den Ausbau oder den Aufbau einer Versorgungseinrichtung 11 in dieser Rasterzelle 27 erfolgen.

Im Folgenden ist noch eine besonders bevorzugte Ausführung beschrieben, die sich hier beispielhaft auf Tankstellen als Referenzeinrichtungen bezieht und als Versorgungseinrichtungen jeweils eine Betriebsstoff anbietende Tankstelle (BAT) beispielhaft zugrunde legt, wobei eine solcher Betriebsstoff zum Beispiel einer der beschriebenen Energieträger sein kann.

Um den Bedarfswert B zu bestimmen, werden zwei Berechnungen hintereinander durchgeführt. Zunächst wird der Bedarf durch die Tankstellendichte berechnet. Es werden die Tankstellen in jeder Zelle aufsummiert. Im darauffolgenden Schritt wird der Bedarf in der Nachbarschaft einer BAT reduziert, um so das finale Bedarfsraster zu bestimmen. Als Kandidaten für den Ausbau kommen alle Rasterzellen in Frage, in denen mindestens eine Tankstelle vorhanden ist, beziehungsweise deren Bedarf nach dieser Berechnung größer als Null ist.

Die Initialisierung des Bedarfsrasters kann wie folgt erfolgen. Der Bedarf nach einem Betriebsstoff wird durch ein quadratisches Raster repräsentiert, in dem jede Zelle ein quantitativer Wert für den Bedarf zugewiesen wird. Durch das Rastern kann der Raum vereinfacht werden und sich nahegelegene Tankstellen können zu einem Bedarfspunkt zusammengefasst werden. Darüber hinaus lassen sich Raster relativ einfach durch eine Tabelle repräsentieren. Der Bedarfswert der Zellen bestimmt sich durch die Anzahl der Tankstellen in jeder Zelle selbst und durch BATs in der Nachbarschaft. Diese Berechnung begründet sich in der Annahme, dass sich die Tankstellen an Orten befinden, an denen ein lokaler Bedarf nach Betriebsstoffen vorhanden ist. Tankstellen gibt es nun seit mehreren Jahrzehnten und sind daher durch den wirtschaftlichen Druck gut an die Nachfrage angepasst. Darüber hinaus wird angenommen, dass jede Tankstelle den gleichen Bedarf repräsentiert. Die Größe oder der Umsatz einer Tankstelle wird somit vernachlässigt. Daraus ergibt sich, dass die Kraftstoffnachfrage an Orten mit vielen Tankstellen größer ist, als an Orten mit wenigen Tankstellen. Die Nachfragedifferenz bemisst sich an der Differenz der Tankstellendichte. Des Weiteren wird die Annahme getroffen, dass sich die Nachfrage nach einem neuen Betriebsstoff genauso regional verteilt, wie die Nachfrage nach konventionellem Kraftstoff, jedoch zunächst nicht so groß ist. Unter diesen Annahmen wird also der Bedarf nach alternativem Kraftstoff in einer Rasterzelle durch die Anzahl der in ihr enthaltenen Tankstellen repräsentiert. Dieser Wert kann alleine jedoch nur schwer interpretiert werden. Vielmehr muss er immer in Relation zu den anderen Zellen im Untersuchungsraum gesehen werden. Die Größe des Bedarfswertes ist entscheidend von der Größe der Rasterzellen abhängig. Ziel des Bedarfsrasters ist folglich nicht nur, den Bedarf in einer bestimmten Region zu quantifizieren, sondern vielmehr auch ihn in die Relation von anderen Regionen des Untersuchungsraums zu setzen.

Das Bedarfsraster wird im ersten Schritt ohne die Berücksichtigung bereits vorhandener BATs initialisiert. Hierfür müssen als erstes die Geokoordinaten, Längengrad $\lambda$ und Breitengrad $\varphi$, in eine euklidische Ebene mit den Koordinaten x und y transformiert werden. Für diese Transformation gibt es verschiedene Möglichkeiten, die insbesondere in der Kartenprojektion Anwendung finden. In dieser Arbeit wird eine Mollweide-Projektion[1] mit einem Ost-West-Versatz verwendet. Die Mollweide-Projektion ist eine flächentreue Projektion, die sich für die Darstellung von Verteilungen eignet.

Wie bei allen Transformationen dieser Art, treten auch bei der Mollweide-Projektion Verzerrungen auf. Diese sind im Bereich um den Äquator und um den Meridian minimal und nehmen mit zunehmender Entfernung von diesen zu. Durch einen Versatz in der Ost-West-Richtung, lassen sich die zu transformierenden Koordinaten in die Nähe des Nullmeridians rücken, wodurch sich die Verzerrungen reduzieren lassen. Dennoch nehmen die diese mit zunehmendem Abstand vom Äquator und mit steigender Ost-West-Ausdehnung der Koordinaten zu. Es wird jedoch angenommen, dass sich diese Verzerrung bei der Betrachtung einzelner Länder in der Europäischen Region nicht auf die Ergebnisse auswirkt.

Für die verwendete Projektion werden die Koordinaten bevorzugt zunächst in Ost-West-Richtung möglichst nahe an den Nullmeridian verschoben. Hierfür wird das arithmetische Mittel der Längengrade $\bar{\lambda}$ des östlichsten Längengrades $\lambda_{ost}$ und des westlichsten Längengrades $\lambda_{west}$ berechnet.

$$\bar{\lambda} = \frac{\lambda_{ost} + \lambda_{west}}{2}$$

$\bar{\lambda}$ wird dann von den Längengraden aller Punkte abgezogen, sodass dieser nun den Nullmeridian darstellt. Daraufhin können alle Punkte mit der Mollweide-Projektion in die zweidimensionale Ebene transformiert werden. Hier ergeben sich für die x- und y-Koordinaten die folgenden Werte.

$$x = R * \frac{\sqrt{8}}{\pi} * \cos(\theta) * rad(\lambda - \bar{\lambda})$$

$$y = \sqrt{2} * R * \sin(\theta)$$

R beschreibt den Radius der Erde und $\theta$ einen Hilfswinkel, der wie folgt definiert ist:

$$2 * \theta + \sin(2 * \theta) = \pi * \sin(\varphi)$$

Im abschließenden Schritt können die kartesischen Koordinaten in das quadratische Raster überführt werden. Das Raster wird dabei so ausgelegt, dass es symmetrisch zum kartesischen Koordinatensystem liegt und ein Knotenpunkt des Rasters im Ursprung, also dem Referenzpunkt, liegt. So verlaufen die Achsen des Rasters in derselben Richtung wie die Achsen des euklidischen Raumes. Das Raster ist dann bis auf die Rasterweite w, die als Variable des Modells gilt, in seiner Lage vollständig definiert. Als finaler Schritt werden die Tankstellen für jedes Rasterquadrat aufsummiert. Für jedes Raster mit den Rasterkoordinaten m in x-Richtung und $n$ in y-Richtung des euklischen Koordinatensystems ergibt sich der Bedarfswert $T_{m,n}$ aus der Summe der Tankstellen $t_{x,y}$, die in das Rasterquadrat fallen. Jede Tankstelle $t_{x,y}$ wird gleich bewertet. Dabei beschreibt die Menge $l_{m,n}$ alle x- und y-Koordinatenpunkte, die in ein Rasterquadrat fallen.

$$t_{x,y} = 1 \quad \forall t_{x,y}$$

$$T_{m,n} = \sum_{(x,y)\in I_{m,n}} t_{x,y} \; \forall m,n$$

$$I_{m,n} = \{(x,y)\,|\, w*m \le x < w*(m+1), w*n \le y < w*(n+1)\} \; \forall m,n$$

Die Koordinaten m und $n$ des Rasters sind durch die Rasterweite w und die maximale Ausdehnung der Tankstellenkoordinaten wie folgt begrenzt:

$$m \le \left\lceil \frac{\max(x)}{w} \right\rceil$$

$$n \le \left\lceil \frac{\max(y)}{w} \right\rceil$$

Durch die Rasterweite w lässt sich das Raster entscheidend beeinflussen. Eine Vergrößerung der Rasterweite w führt zu größeren Rasterquadraten, wodurch sich mehrere Einflüsse auf das Modell ergeben. Eine höhere Rasterweite verringert den Detailgrad des Rasters und verringert damit die Rechenzeit des Algorithmus. Gleichzeitig ist ein verringerter Detailgrad auch mit Informationsverlust und damit mit ungenaueren Ergebnissen verbunden.

Der Einfluss einer BAT auf den Bedarf in ihrer Nachbarschaft wird berücksichtigt, indem der Bedarf in der Nachbarschaft reduziert wird. In Anlehnung an das Covering-Problem (Abdeckungsproblem), decken BATs den Bedarf in einer bestimmten Reichweite komplett ab. Es wird davon ausgegangen, dass der Kunde zunächst von einer weiteren Tankstelle in der Nachbarschaft nicht ausreichend profitieren würde. Da der Kunde während seinen Fahrten regelmäßig längere Strecken zurücklegt, die die Reichweite des Fahrzeugs unterschreiten, sind auf einer Strecke nicht unbedingt mehrere Tankstellen notwendig. Wird eine Tankstelle in einer Nachbarschaft platziert, kann der Kunde diese anfahren und benötigt in frühen Stadien der Infrastrukturentwicklung keine weiteren Tankstellen. Jede BAT verfügt über eine Nachbarschaft, in der der Bedarf einer Tankstelle komplett gedeckt wird. Das System sieht zusätzlich vor, dass sich der Bedarf in einer größeren Reichweite um einen relativen Anteil reduziert. Dieser weitere Weg ist für den Kunden nur teilweise zufriedenstellend, weshalb der Bedarf hier nur anteilig reduziert wird. Gleichzeitig ermöglicht diese Abstufung die Bevorzugung der näheren Tankstellen in dem Modell darzustellen beziehungsweise im Umkehrschluss auch weiter entfernte Tankstellen bei der Standortauswahl zu berücksichtigen.

Um die Nachbarschaftsweite in dem Raster zu quantifizieren wird die Moore-Nachbarschaft verwendet. Die Moore-Nachbarschaft beschreibt alle angrenzenden Zellen in einem quadratischen Raster, auch die nur über eine Ecke mit dem Zentrum verbunden sind. Werden die Nachbarn dieser Nachbarn wiederum zur Nachbarschaft hinzugezogen, so wird ein vielfaches der Nachbarschaft generiert. Die Moore-Nachbarschaft lässt sich so beliebig vergrößern und auch nur mittelbar verbundene Zellen können zur Nachbarschaft gezählt werden. Die Weite der Nachbarschaft r wird hierbei in der Nachbarschaftsweite gemessen, die sich aus der $n$-fachen Moore-Nachbarschaft und der Rasterweite w ergibt:

$$r = n*w, \qquad n \in \mathbb{N}_0$$

Für die direkte Nachbarschaft, die den Bedarf komplett befriedigt, wird die innere Nachbarschaftsweite $r_1$ verwendet. Bedarfszellen, die nur innerhalb der äußeren Nachbarschaftsweite $r_2$ liegen, werden um den Faktor $f_2$ reduziert. Damit ergibt sich der reduzierte Bedarfswert $T'_{m,n}$ innerhalb der Nachbarschaftsweiten um eine BAT mit den Rasterkoordinaten $m_a$ und $n_a$ wie folgt:

$$T'_{m,n} = 0 \quad \forall a,m,n \,|\, m \in [m_a - r_1, m_a + r_1], n \in [n_a - r_1, n_a + r_1]$$

$$T'_{m,n} = T_{m,n} \cdot f_2 \quad \forall a,m,n \,|\, m \in [m_a - r_2, m_a + r_2], n \in [n_a - r_2, n_a + r_2]$$

Der Faktor $f_2$ ist dabei ein Parameter des Modells und kann verändert werden. Damit jedoch der Bedarf sinngemäß reduziert wird, muss $f_2$ zwischen Null und Eins liegen. Die Nachbarschaftsweiten $r_1$ und $r_2$ können flexibel festgelegt

werden, wobei sie aufgrund der Rasterstruktur immer ein ganzzahliges vielfaches der Rasterweite des Rasters sein müssen. Indem in der inneren Nachbarschaftsweite der Bedarf komplett auf null gesenkt wird und die in der inneren Nachbarschaft einer BAT liegenden Tankstellen keine potentiellen Ausbaukandidaten mehr darstellen, wird durch die innere Nachbarschaftsweite $r_1$ der minimale Abstand zwischen zwei BATs definiert. Diese Größe soll damit die Entfernung repräsentieren, die für den Kunden einen Umweg darstellt, der keine wahrnehmbaren Qualitätseinbußen repräsentiert. Die äußere Nachbarschaftsweite $r_2$ bestimmt hingegen bis zu welcher Entfernung ein Bedarf gedeckt wird. Sie repräsentiert also den maximalen Einflussradius einer BAT auf den Bedarf in ihrer Nachbarschaft. Mit diesen Modellparametern lassen sich die Ergebnisse des Systems beeinflussen und so an die unterschiedlichen Anforderungen der Infrastrukturplanung anpassen.

Aufbauend auf dem Bedarfsraster wird ein Bewertungsraster erstellt. Dieses bewertet jede Rasterzelle danach, wie viele Tankstellen durch den Ausbau einer Tankstelle im Bedarfsraster abgedeckt werden können. Diese Bewertung dient als Indikator, um zentrale Tankstellen zu identifizieren zu können. Die Bewertungsfunktion ist also die Abdeckung möglichst vieler Tankstellen für die Versorgung mit einem Betriebsstoff im Einzugsgebiet des Ausbaukandidaten. Die darauf basierende Auswahl wird mit Hilfe eines Greedy-Algorithmus getroffen. Dies ist eine heuristische Methode, die immer den nächstbesten Zielwert auswählt, umso zu einem möglichst guten Ergebnis zu gelangen.

Jede Zelle, in der ein ungedeckter Bedarf besteht, soll für einen Greedy-Algorithmus danach bewertet werden, wie sich der Ausbau auf die Versorgungsgüte auswirken würde. Um jedoch die Rechenzeit zu verringern, wird lediglich die Nachbarschaft der Ausbaukandidaten untersucht und nicht der direkte Einfluss auf die komplette Versorgungsgüte der Region. Dafür wird für jede Rasterzelle die Nachbarschaft analysiert. Es wird bestimmt, wie viele Tankstellen sich in der inneren Nachbarschaft befinden und wie viele in der Äußeren liegen. Anschließend wird die Anzahl der Tankstellen in der inneren Nachbarschaft aufsummiert. Die Tankstellen in der äußeren Nachbarschaft, die nicht in der inneren Nachbarschaft liegen, werden mit dem Faktor $f_2$ bewertet. Mit der gegebenen Bedarfsverteilung $T_{m,n}$, ergibt sich für jede Rasterzelle die folgende Bewertung $B_{m,n}$. Die Koordinaten der Rasterzellen in der inneren Nachbarschaft werden über die Menge $J_{m,n}$ mit der inneren Nachbarschaftsweite $r_1$ beschrieben und die äußere Nachbarschaft wird über die Menge $K_{m,n}$ mit der Nachbarschaftsweite $r_2$ definiert.

$$B_{m,n} = (1 - f_2) * \sum_{(m,n) \in J_{m,n}} T_{m,n} + f_2 \cdot \sum_{(m,n) \in K_{m,n}} T_{m,n} \ \forall m, n$$

$$J_{m,n} = \{(m,n)\,|\, m - r_1 \le m \le m + r_1, n - r_1 \le n \le n + r_1\} \ \forall m, n$$

$$K_{m,n} = \{(m,n)\,|\, m - r_2 \le m \le m + r_2, n - r_2 \le n \le n + r_2\} \ \forall m, n$$

Dadurch, dass die innere Nachbarschaft innerhalb der Äußeren liegt, muss deren Tankstellenanzahl um den Anteil reduziert werden, der in der äußeren mit dem Faktor $f_2$ bewertet wurde. Somit wird die Tankstellenanzahl in der inneren Nachbarschaft nur mit ihrer Summe gewichtet. In diesem Rechenschritt ist die Bewertung des Bedarfs in der äußeren Nachbarschaft durch den Parameter $f_2$ steuerbar.

Dann erfolgt eine Auswahl der Rasterzellen für eine Installation eine jeweiligen Versorgungseinrichtung. In diesem Fall findet eine Greedy-Heuristik Anwendung. Das bedeutet, dass in jedem Entscheidungsschritt der Kandidat ausgewählt wird, der in der Bewertungsmatrix den größten Wert hat, also am meisten Bedarf abdecken kann. Nachdem der Kandidat ausgewählt wurde, wird der Bedarf und die Bewertung in allen potentiell vom Ausbau betroffenen Zellen aktualisiert. Hierfür wird zunächst der Bedarf in der Nachbarschaft des Ausbaukandidaten gemäß der beschriebenen Anpassung des Bedarfs reduziert. Die Bewertung wird dann nach dem neuen Bedarfsraster in der Nachbarschaft mit der doppelten Nachbarschaftsweite $r_2$ (Abstand) um den Ausbaukandidaten aktualisiert. Indem das Raster immer nur lokal aktualisiert wird, lässt sich Rechenzeit einsparen. In dem inneren Radius um den Ausbaukandidaten wird der Bedarf gemäß der Bedarfsreduzierung auf null gesenkt. Die davon betroffenen Zellen sind in weiteren Schritten keine Ausbaukandidaten mehr. In dem Bewertungsraster weißt nun eine andere Zelle den größten Wert auf, die analog zu dem vorherigen Prozess ausgebaut wird. Bedarfs- und Bewertungsraster werden erneut aktualisiert. Diese Schritte werden so lange wiederholt, bis ein Abbruchkriterium erfüllt ist. Dieses kann entweder durch eine Anzahl an auszubauenden Tankstellen bestehen oder durch einen Mindestbedarf, der durch den Ausbau einer Tankstelle abgedeckt werden soll. Das Abbruchkriterium ist von besonderer Bedeutung für eine mehrperiodige Berechnung.

Eine mehrperiodige Planung dieses Modells basiert auf der hintereinander ausgeführten Kandidatenauswahl mit unterschiedlichen Parametern. Als entscheidende Stellschrauben sind hier das Abbruchkriterium und die Nachbarschaftsweiten zu nennen. Sind die Ausbaukandidaten für eine Planungsperiode bestimmt, so beginnen die Berechnungen mit den neuen Parametern von vorn. Der Unterschied ist jedoch, dass die Ausbaukandidaten in der nächsten Berechnung in der Anpassung des Bedarfs nach der Erstellung der Raster als bereits ausgebaut berücksichtigt werden.

Für das Abbruchkriterium lässt sich jedes Merkmal des Modells oder der Tankstelleninfrastruktur verwenden, das sich über die Laufzeit des Modells verändert. Das System ermittelt so lange neue Ausbaukandidaten, bis dieses Merkmal einen vordefinierten Wert einnimmt oder über- bzw. unterschreitet. Dann ist das Abbruchkriterium erfüllt und es werden keine weiteren Kandidaten bestimmt. Aus der Vielzahl der denkbar möglichen Merkmale wurden die Folgenden zur genaueren Betrachtung herangezogen:

- Anzahl der Ausbaukandidaten: Eine Modellphase kann so lange durchgeführt werden, bis eine vordefinierte Anzahl an Ausbaukandidaten ermittelt wurde. Dieses Merkmal bietet sich an, wenn man bereits Erkenntnisse darüber hat, wie viele Tankstellen für einen neuen Betriebsstoff ausgerüstet werden sollen und hierfür die besten Kandidaten ermittelt werden sollen.
- Bewertung der Ausbaukandidaten: Die Bewertung der Ausbaukandidaten verringert sich mit zunehmender Laufzeit des Modells. Sie zählt die Anzahl der Tankstellen in der Nachbarschaft und ist damit der Indikator für den Bedarf in der Nachbarschaft. Somit kann dieses Merkmal die Rentabilität der Investition einer Tankstelle abschätzen. Wird die Bewertung für das Merkmal des Abbruchkriteriums verwendet, so wird zwar die Rentabilität der einzelnen Tankstellen betrachtet, jedoch nicht unbedingt die Qualität der Infrastruktur sichergestellt.
- Versorgungsgüte: Die Versorgungsgüte bemisst sich als mittlere KEZNAT (Kürzeste Entfernung von einer Tankstelle zur nächstgelegenen ausgebauten Tankstelle) und nimmt mit zunehmendem Ausbaugrad ab. Die Versorgungsgüte als Merkmal stellt die Qualität der gesamten Infrastruktur ins Zentrum der Betrachtung, garantiert dabei jedoch nicht die Rentabilität einzelner Tankstellen. Sie kann als Kriterium der Kundenerwartung betrachtet werden. Es ist jedoch anzumerken, dass die Berechnung der mittleren KEZNAT verhältnismäßig aufwändig ist und in den Berechnungen des Systems selbst nicht vorgesehen ist. Daher führen derartige Merkmale zu einem erhöhten Rechenaufwand des Modells.

Ist das Abbruchkriterium A erfüllt, kann daraufhin mit den Berechnungen einer neuen Ausbauperiode begonnen werden. Hierfür sollten die Parameter der Nachbarschaftsweiten und das Abbruchkriterium neu festgelegt werden. Die Nachbarschaftsweiten sollten sich dabei mit zunehmendem Ausbaugrad verringern, um somit eine dichtere Versorgung sicherzustellen. Gleichzeitig sollte das Abbruchkriterium so gewählt werden, dass es einen weiteren Ausbau befördert. Dieses Vorgehen lässt sich mehrfach wiederholen, bis die gewünschte Anzahl an Perioden berechnet wurde.

Zusammenfassend betrifft die Idee somit ein Verfahren zum Steuern eines Aufbauprozesses von Versorgungseinrichtungen 11 in einer vorbestimmten geographischen Region 10, in welcher sich bereits Referenzeinrichtungen 12 befinden, wobei durch eine Prozessorschaltung 16 in einer digitalen Landkarte 18 der Region 10 mittels eines Rasters 22 die Region 10 in Rasterzellen 22' eingeteilt wird und für jede Rasterzelle 22' ein initialer Bedarfswert T ermittelt wird und deren Bedarfswert B in Abhängigkeit von einem Abstand zu einer zentralen Rasterzelle 32, die eine bereits vorhandene Versorgungseinrichtung 11 aufweist, reduziert wird, um ein Versorgungspotential der zentralen Rasterzelle 32 für die Rasterzelle 22' zu simulieren, und in einer virtuellen Ausbauphase 24 pro Rasterzelle 22 ein Bedarfsdeckungswert D bei zumindest virtuellem Vorhanden-Sein einer neuen Versorgungseinrichtung 11 ermittelt wird, und in einer Auswahlphase 28 diejenige Rasterzelle 22' mit dem größten Bedarfsdeckungswert D ausgewählt wird.

Insgesamt zeigt das Beispiel, wie eine Methodik zur Strategieentwicklung und/oder Beurteilung eines Aufbaus einer neuen Tankstelleninfrastruktur bereitgestellt werden kann.

**Bezugszeichenliste**

| | |
|---|---|
| 10 | Region |
| 11 | Versorgungseinrichtung |
| 12 | Referenzeinrichtung |
| 13 | Ausbaustufe |
| 14 | System |
| 15 | Baueinheit |
| 16 | Prozessorschaltung |
| 17 | Kartendaten |
| 18 | Landkarte |
| 19 | Datensatz |
| 20 | Signalisierung |
| 21 | Geopositionsdaten |

| 22 | Raster |
|---|---|
| 22' | Rasterzelle |
| 23 | Bedarfswertanpassung |
| 24 | Ausbauphase |
| 25 | innere Nachbarschaftsumgebung |
| 26 | äußere Nachbarschaftsumgebung |
| 27 | Rasterzelle |
| 28 | Auswahlphase |
| 30 | Rasterzelle |
| 31 | Rahmen |
| 32 | Rasterzelle |
| B | Bedarfswert |
| D | Bedarfsdeckungswert |
| f1, f2 | Multiplikationsfaktor |
| INW | innere Nachbarschaftsweite |
| J | Menge |
| K | Menge |
| m, n | Rasterkoordinate |
| ONW | äußere Nachbarschaftsweite |
| R | Raster |
| R2 | Rechteckraster |
| R3 | Dreiecksraster |
| S1-S26 | Verfahrensschritt |
| T | Bedarfswert |
| w | Rasterweite |
| X | Koordinate |
| Y | Koordinate |

**Patentansprüche**

1. Verfahren zum Steuern eines Aufbauprozesses von Versorgungseinrichtungen (11) in einer vorbestimmten geographischen Region (10), in welcher sich bereits Referenzeinrichtungen (12) befinden, wobei jede Versorgungseinrichtung (11) ein vorbestimmtes Produkt und/oder eine vorbestimmte Dienstleistung bereitstellen soll und jede der Referenzeinrichtungen (12) bereits ein vorbestimmtes Referenzprodukt und/oder eine vorbestimme Referenzdienstleistung anbietet, wobei durch eine Prozessorschaltung (16)

   - in einer digitalen Landkarte (18) der Region (10) mittels eines Rasters (22) mit einer vorbestimmten Rasterweite (w) die Region (10) in Rasterzellen (22') eingeteilt wird, und
   - in einer initialen Bedarfsermittlung (S15) für einige oder jede Rasterzelle (11) folgender Schritt durchgeführt wird: für die Rasterzelle (22') wird in Abhängigkeit von einer Anzahl der in dieser Rasterzelle (22') befindlichen Referenzeinrichtungen (12) ein initialer Bedarfswert (T) ermittelt, und
   - in einer Bedarfswertanpassung (23) für solche der Rasterzellen (22'), in welchen sich bereits eine Versorgungseinrichtung (11) befindet, folgender Schritt durchgeführt wird: die Rasterzelle (22') wird als zentrale Rasterzelle (30, 32) für zumindest eine lokale Nachbarschaftsumgebung (25, 26) betrachtet, wobei sich in der jeweiligen Nachbarschaftsumgebung (25, 26) andere der Rasterzellen (22') befinden, die sich von der zentralen Rasterzelle (32) aus mitversorgen lassen und deren aktueller Bedarfswert (B) deshalb in Abhängigkeit von einem Abstand zu der zentralen Rasterzelle (32) reduziert wird, um ein Versorgungspotential der zentralen Rasterzelle (32) für die jeweilige Nachbarschaftsumgebung (25, 26) zu simulieren, und
   - in einer virtuellen Ausbauphase (24) für einige oder jede der Rasterzellen (22') folgender Schritt durchgeführt wird: die Rasterzelle (22') wird als zentrale Rasterzelle (32) für ihre zumindest eine lokale Nachbarschaftsumgebung (24, 25) betrachtet und es wird ermittelt, welche potentielle Bedarfsdeckung mittels einer Versorgungseinrichtung (11) in der zentralen Rasterzelle (32) möglich wäre, indem der aktuelle Bedarfswert (B) der zentralen Rasterzelle (32) in Abhängigkeit von dem jeweiligen aktuellen Bedarfswert (B) der anderen Rasterzellen (22') in der jeweiligen Nachbarschaftsumgebung (24, 25) gemäß ihrem Abstand aufgewertet wird, woraus sich ein Bedarfsdeckungswert (D) der zentralen Rasterzelle (32) ergibt, und
   - in einer Auswahlphase (28) die Rasterzelle (22') mit dem größten Bedarfsdeckungswert (D) ausgewählt wird und zu der ausgewählten Rasterzelle (27) signalisiert wird, dass darin eine Versorgungseinrichtung (11) bereitzustellen ist.

2. Verfahren nach Anspruch 1, wobei gemäß der Signalisierung (20) für die ausgewählte Rasterzelle (27) oder die ausgewählten Rasterzellen (27) jeweils ein Installationsvorgang zum Installieren jeweils einer Versorgungseinrichtung (11) ausgelöst wird.

3. Verfahren nach einem der vorhergehenden Ansprüche, wobei nach der Auswahlphase (28) die Bedarfswertanpassung (23), die virtuelle Aufbauphase (24) und die Auswahlphase (28) so oft wiederholt werden, bis ein vorbestimmtes Abbruchkriteriums (A) erfüllt ist, wobei vor jeder Wiederholung zumindest für jede bereits ausgewählte Rasterzelle (27) deren Bedarfswert (B) auf 0 gesetzt wird.

4. Verfahren nach Anspruch 3, wobei zusätzlich zumindest in einer innersten Nachbarschaftsumgebung (25) der ausgewählten Rasterzelle (27) der jeweilige Bedarfswert (B) der Rasterzellen (22') der Nachbarschaftsumgebung (25) ebenfalls auf 0 gesetzt wird.

5. Verfahren nach Anspruch 3 oder 4, wobei das Abbruchkriterium (A) umfasst, dass eine vorbestimmte Gesamtanzahl an Rasterzellen (22') ausgewählt worden ist und/oder zumindest ein von den ausgewählten Rasterzellen (27) abhängiger vorbestimmter Parameterwert, insbesondere ein Versorgungsgütemaß, einen jeweils vorbestimmten Wert erreicht hat.

6. Verfahren nach einem der vorhergehenden Ansprüche, wobei für jede Nachbarschaftsumgebung (25, 26) jeweils ein Multiplikationsfaktor (f1, f2) vorgegeben wird, welcher für jede Nachbarschaftsumgebung (25, 26) umso kleiner ist, je kleiner ein mittlerer Abstand von deren Rasterzellen (22') zu der zentralen Rasterzelle (32) ist, und in der Bedarfswertanpassung das Reduzieren durch Multiplizieren mit dem jeweiligen Multiplikationsfaktor der Nachbarschaftsumgebung erfolgt.

7. Verfahren nach einem der vorhergehenden Ansprüche, wobei für jede Nachbarschaftsumgebung (25, 26) jeweils ein Multiplikationsfaktor (f1, f2) vorgegeben wird, welcher für jede Nachbarschaftsumgebung (25, 26) umso größer ist, je kleiner ein mittlerer Abstand von deren Rasterzellen (22') zu der zentralen Rasterzelle (32) ist, und in der simulierten Ausbauphase das Aufwerten des Bedarfswerts der zentralen Rasterzelle ein Multiplizieren des jeweiligen Bedarfswerts der Rasterzellen der Nachbarschaftsumgebung mit dem jeweiligen Multiplikationsfaktor der Nachbarschaftsumgebung umfasst.

8. Verfahren nach einem der vorhergehenden Ansprüche, wobei die jeweilige Nachbarschaftsumgebung (25, 26) als Ring oder Rahmen um die zentrale Rasterzelle (32) definiert ist oder wobei die jeweilige Nachbarschaftsumgebung (25, 26) in Abhängigkeit von einer Verkehrsinfrastruktur geformt ist, die sich in der zentralen Rasterzelle (32) und/oder zwischen der zentralen Rasterzelle (32) und einem Gebiet der Nachbarschaftsumgebung (25, 26) und/oder in dem Gebiet der Nachbarschaftsumgebung (25, 26) befindet.

9. Verfahren nach einem der vorhergehenden Ansprüche, wobei das Raster (22) als Rechteckraster (R2) oder als hexagonales Raster (R1) oder als Dreiecksraster (R3) realisiert wird.

10. Verfahren nach einem der vorhergehenden Ansprüche, wobei den Referenzeinrichtungen jeweils Geopositionsdaten (21) jeweiliger Geokoordinaten der Referenzeinrichtung (12) zugeordnet sind und die Geopositionsdaten (21) mittels einer kartographischen Projektion auf eine Ebene der Landkarte (18) transformiert werden oder wobei das Raster (22) in Kugelkoordinaten oder sphärische Koordinaten definiert ist.

11. Verfahren nach einem der vorhergehenden Ansprüche, wobei der Aufbauprozess Versorgungseinrichtungen (11) für einen vorbestimmten Betriebsstoff für Kraftfahrzeuge betrifft und als Referenzeinrichtungen (12) Tankstellen zugrunde gelegt werden.

12. Prozessorschaltung (16), die dazu eingerichtet ist, einen Datensatz (19), welche in einer vorbestimmten geographischen Region (10) befindliche Referenzeinrichtungen (12) und Versorgungseinrichtungen (11) beschreibt, zu empfangen und auf Grundlage des Datensatzes (19) ein Verfahren nach einem der vorhergehenden Ansprüche durchzuführen.

13. System (14) zum Durchführen eines Aufbauprozesses zum Aufbauen von Versorgungseinrichtungen (11) in einer vorbestimmten geographischen Region (10), wobei das System (14) eine Prozessorschaltung (16) gemäß Anspruch 12 aufweist und die Prozessorschaltung (16) mit zumindest einer Baueinheit (15) zum Installieren einer Versorgungseinrichtung (11) gekoppelt ist.

14. Versorgungsinfrastruktur, die dazu eingerichtet ist, eine vorbestimmte geographische Region (10) mit einem vorbestimmten Produkt zu versorgen, wobei die Versorgungsinfrastruktur hierzu Versorgungseinrichtungen (11) aufweist, deren Standorte in der Region (10) durch ein Verfahren nach einem der Ansprüche 1 bis 11 und/ oder durch eine Prozessorschaltung nach Anspruch 12 und/oder durch ein System nach Anspruch 13 festgelegt sind.

15. Versorgungsverfahren, durch welches ein vorbestimmtes Produkt, insbesondere ein Betriebsmittel für Kraftfahrzeuge, bevorzugt ein Kraftstoff, innerhalb einer vorbestimmten Region über Versorgungseinrichtungen ausgegeben oder bereitgestellt wird, deren Standorte oder Rasterzellen durch ein Verfahren nach einem der 1 bis 11 ermittelt sind.

Fig. 1

**Fig. 2**

R1          R2          R3

Fig. 3

EP 3 901 871 A1

Fig. 4

EP 3 901 871 A1

EP 3 901 871 A1

Fig. 5

Fig. 6

Europäisches
Patentamt

European
Patent Office

Office européen
des brevets

**EUROPÄISCHER RECHERCHENBERICHT**

Nummer der Anmeldung

EP 21 16 9682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 467 556 B2 (KLABJAN DIEGO [US]; UNIV NORTHWESTERN [US]) 5. November 2019 (2019-11-05) * Zusammenfassung; Ansprüche 1-20; Abbildungen 1-9 * * Absätze [0015] - [0108] * ----- | 1-15 | INV. G06Q10/06 G06Q30/02 G06Q50/06 |
| X | US 2017/077701 A1 (MEIER PAUL JOSEPH [US]) 16. März 2017 (2017-03-16) * Zusammenfassung; Ansprüche 1-8; Abbildungen 1-31 * * Absätze [0020] - [0062], [0099] - [0188] * ----- | 1-15 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 14. September 2021 | Streit, Stefan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ...................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 16 9682

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-2021

| Im Recherchenbericht angeführtes Patentdokument | Datum der Veröffentlichung | Mitglied(er) der Patentfamilie | Datum der Veröffentlichung |
|---|---|---|---|
| US 10467556 B2 | 05-11-2019 | KEINE | |
| US 2017077701 A1 | 16-03-2017 | US 2017077701 A1<br>US 2020381919 A1 | 16-03-2017<br>03-12-2020 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **XU, X. ; XU, B. ; DONG, J. ; LIU, X.** Near-term analysis of a roll-out strategy to introduce fuel cell vehicles and hydrogen stations in Shenzhen China. *Applied Energy,* 2017, vol. 196, 229-237

- **BREY, J. J. ; BREY, R. ; CARAZO, A. F. ; RUIZ-MONTERO, M. J. ; TEJADA, M.** Incorporating refuelling behaviour and drivers' preferences in the design of alternative fuels infrastructure in a city. *Transportation Research Part C: Emerging Technologies,* 2016, vol. 65, 144-155